# EUROPÄISCHE PATENTSCHRIFT

(11) **EP 2 307 580 B1**
(45) Veröffentlichungstag und Bekanntmachung des Hinweises auf die Patenterteilung: **31.01.2018**
(21) Anmeldenummer: 09761301.2
(22) Anmeldetag: 08.04.2009
(51) Int. Cl.: C21C 7/00, C21C 5/52, C21C 5/54

(54) **VERFAHREN ZUR ERZEUGUNG EINER SCHAUMSCHLACKE AUF AUSTENITISCHEN ROSTFREISCHMELZEN IN EINEM ELEKTROLICHTBOGENOFEN**
PROCESS FOR PRODUCING A FOAMED SLAG ON AUSTENITIC STAINLESS MELTS IN AN ELECTRIC ARC FURNACE
PROCÉDÉ DE FORMATION DE LAITIER MOUSÉ SUR DES BAINS DE FUSION D'ACIER INOXYDABLE AUSTÉNITIQUE DANS UN FOUR À ARC ÉLECTRIQUE

(30) Priorität: 09.06.2008 DE 102008028011
(43) Veröffentlichungstag der Anmeldung: 13.04.2011
(73) Patentinhaber: SMS group GmbH, 40237 Düsseldorf (DE)
(72) Erfinder: REICHEL, Johann, 40489 Düsseldorf (DE); ROSE, Lutz, 47259 Duisburg (DE)
(74) Vertreter: Klüppel, Walter
(86) Internationale Anmeldenummer: PCT/DE2009/000497
(87) Internationale Veröffentlichungsnummer: WO 2009/149679

(56) Entgegenhaltungen:
- WO-A-2004/104232
- WO-A-2007/087979
- US-A- 3 525 604

## Beschreibung

Die Erfindung betrifft ein Verfahren zur Erzeugung einer Schaumschlacke auf austenitischen Rostfreischmelzen in einem Elektrolichtbogenofen,

Beim Betreiben von Elektrolichtbogenöfen werden die Chargen, und zwar in erster Linie Schrott, und Legierungen mit den Lichtbögen der Elektroden, die von oben in das Ofengefäß ragen, aufgeschmolzen.

Hierbei erfüllt die Schlacke neben ihrer Primärfunktion, also der Entfernung von unerwünschten Bestandteilen aus der Schmelze, im schaumförmigen Zustand eine Schutzfunktion.

In diesem Zustand umhüllt die Schlacke nämlich den Raum zwischen den Elektrodenenden und der Metalloberfläche und schützt die Feuerfest-Ausmauerung des Ofens vor der Stahlungsenergie des Elektrolichtbogens.
Da die aufgeschäumte Schlacke die Wärme schlecht leitet, wird die Strahlung des Lichtbogens gegenüber der Wandung des Elektroofens stark reduziert und damit das Energieeinbringen in die metallische Schmelze verbessert.

Bei nicht rostfreien Stählen bzw. Stählen mit niedrigem Chromgehalt wird die Schaumschlacke durch gleichzeitiges Einblasen von Kohlenstoff und Sauerstoff erreicht.

Bei hochchromhaltigen Schmelzen reagiert der eingeblasene Kohlenstoff prinzipiell als Reduktionselement des Chromoxids. Da der Gehalt von Eisenoxid in der Schlacke sehr gering ist, kann das Aufschäumen nicht im gewünschten Maß erreicht werden.

Nach der EP 0 829 545 B1 wird das Aufschäumen dadurch verbessert, dass in die Schlacke ein Pulver eingeführt wird, das sich aus einem Metalloxid, entweder Zinkoxid oder Bleioxid, und Kohlenstoff zusammensetzt. Dabei wird das im Pulver enthaltene Oxid wird durch die Reaktion mit dem Kohlenstoff reduziert, wobei durch das entstehende Kohlenmonoxid Blasen zum Aufschäumen gebildet werden. Bedingt durch die große Oberfläche des Pulvers kommt es aber zu sehr heftigen und örtlich begrenzten Reaktionen.

Aus der DE 103 23 505 ist es bekannt, statt Pulver Formteile, wie beispielsweise Pellets oder Briketts zu chargieren, wodurch eine sehr kontrollierte, gleichmäßig und langsam ablaufende
Reaktion erreicht wird.

Aus der US 3 525 604 A ist ein Verfahren zur Erzeugung einer Schaumschlacke auf Rostfreistahlschmelzen in einem Elektrolichtbogenofen bekannt, wobei unterhalb der Schlacke, an der Metallschlackengrenze, ein Gemisch in Form von Brikkets zugegeben wird.

Die WO 2004/104232 offenbart, dass durch Zugabe von Eisenträgern das Schwimmen von Pellets in einem Schlacke-Metall Bad beeinflusst werden kann

Probleme treten aber immer dann auf, wenn während des Einschmelzens des Fest- materials, in dem Elektrolichtbogenofen sich eine Schlacke bildet, mit Cr-Oxid Konzentrationen höher als 1 0%. Derartige Schlacken können bislang aufgrund ihrer Zusammensetzung nicht im erwünschten Maße verflüssigt und aufgeschäumt werden.

Aufgabe der Erfindung ist es, ein Verfahren zu schaffen, das auch bei derartig hohen Chromoxid Anteilen ein Aufschäumen der Schlacke eintreten lässt.

Gelöst wird diese Aufgabe erfindungsgemäß mit einem Verfahren zur Erzeugung einer Schaumschlacke auf austenitischen Rostfreischmelzen mit einer Cr-Oxid Konzentration höher als 10% in einem Elektrolichtbogenofen, wobei ein Gemisch aus Metalloxiden und Kohlenstoff in den Ofen eingegeben wird, das Metalloxid durch den Kohlenstoff reduziert wird und die entstehenden Gase durch Blasenbildung das Schlackenaufschäumen bewirken, wobei das zu chargierende Gemisch, das in Form von Formteilen, wie Briketts oder Pellets zugegeben wird, neben Nickeloxid, Eisenoxid, Eisenträgern und Kohlenstoff sowie die erforderlichen Bindemittel, enthält und die spezifische Dichte der Formteile mit etwa 6.7t/m³ und die Auflösungsdauer so gewählt sind, dass die Formteile unterhalb der Schlacke, an der Metall-Schlackegrenze schwimmen und damit flächenmäßig verteilt eine kontrollierte optimale Blasenbildung in Bezug auf die Größe und Dauer erreicht wird.

Durch den enthaltenden Nickeloxid Anteil in dem Gemisch, das sehr aktiv ist, wird eine heftige Reaktion mit dem Kohlenstoff hervorgerufen, die allerdings durch die Formgebung, also die Pellets oder Briketts, doch kontrolliert abläuft, und zwar nicht örtlich begrenzt, sondern durch das Schwimmen der Formteile unterhalb der Schlacke, an der Metall-Schlackegrenze, flächenmäßig verteilt.

## Patentansprüche

1. Verfahren zur Erzeugung einer Schaumschlacke auf austenitischen Rostfreischmelzen mit einer Cr-Oxid Konzentration höher als 10% in einem Elektrolichtbogenofen, wobei ein Gemisch aus Metalloxiden und Kohlenstoff in den Ofen eingegeben wird, das Metalloxid durch den Kohlenstoff reduziert wird und die entstehenden Gase durch Blasenbildung das Schlackenaufschäumen bewirken, wobei das zu chargierende Gemisch, das in Form von Formteilen, wie Briketts oder Pellets zugegeben wird, neben Nickeloxid, Eisenoxid, Eisenträgern und Kohlenstoff sowie die erforderlichen Bindemittel, enthält und die spezifische Dichte der Formteile mit etwa 6.7t/m³ und die Auflösungsdauer so gewählt sind, dass die Formteile unterhalb der Schlacke, an der Metall-Schlackegrenze schwimmen und damit flächenmäßig verteilt eine kontrollierte optimale Blasenbildung in Bezug auf die Größe und Dauer erreicht wird.

## Claims

1. Method of producing a foamed slag on austenitic stainless melts with a Cr oxide concentration higher than 10% in an electric arc furnace, wherein a mixture of metal oxides and carbon is fed into the furnace, the metal oxide is reduced by the carbon and the resulting gases produce slag foaming through formation of bubbles, wherein the mixture to be charged, which is fed in the form of moulded bodies such as briquettes or pellets, contains, in addition to nickel oxide, iron oxide, iron carriers and carbon as well as the required binders and the specific density of the moulded bodies at approximately 6.7 t/m³ and the dissolution time are so selected that the moulded bodies float, below the slag, at the metal/slag boundary and thus a controlled optimum bubble formation, which is distributed in terms of area, is achieved with respect to size and duration.

## Revendications

1. Procédé pour l'obtention d'un laitier mousseux sur des bains inoxydables austénitiques possédant une concentration d'oxyde de Cr supérieure à 10% dans un four électrique à arc, dans lequel on introduit dans le four un mélange d'oxydes métalliques et de carbone, on réduit l'oxyde métallique via le carbone, et les gaz qui en résultent déclenchent, via la formation de bulles, la transformation du laitier en mousse, dans lequel le mélange à charger, que l'on ajoute sous la forme d'éléments moulés, tels que des briquettes ou des granulés, contient, en outre, de l'oxyde de nickel, de l'oxyde de fer, des transporteurs du fer et du carbone ainsi que les liants nécessaires, et la masse spécifique des éléments moulés, d'environ 6,7 t/m³, ainsi que la durée de dissolution sont sélectionnés d'une manière telle que les éléments moulés, en dessous du laitier, flottent à la frontière entre le métal et le laitier, si bien que l'on obtient de cette manière une formation de bulles optimale et contrôlée, répartie sur la surface, en fonction de la dimension et de la durée.
